(19) Europäisches Patentamt
European Patent Office
Office européen des brevets

(11) **EP 4 369 434 A1**

(12) **EUROPEAN PATENT APPLICATION**
published in accordance with Art. 153(4) EPC

(43) Date of publication:
**15.05.2024   Bulletin 2024/20**

(21) Application number: 23747297.2

(22) Date of filing: 25.01.2023

(51) International Patent Classification (IPC):
$H01M\ 4/139^{(2010.01)}$   $H01M\ 4/1395^{(2010.01)}$
$H01M\ 4/1391^{(2010.01)}$   $H01M\ 4/04^{(2006.01)}$
$H01M\ 10/052^{(2010.01)}$   $H01M\ 4/38^{(2006.01)}$
$H01M\ 4/48^{(2010.01)}$   $H01M\ 4/02^{(2006.01)}$

(52) Cooperative Patent Classification (CPC):
H01M 4/02; H01M 4/04; H01M 4/139;
H01M 4/1391; H01M 4/1395; H01M 4/38;
H01M 4/48; H01M 10/052; Y02E 60/10

(86) International application number:
**PCT/KR2023/001111**

(87) International publication number:
**WO 2023/146256 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  25.01.2022  KR 20220010594

(71) Applicant: **LG Energy Solution, Ltd.**
**Seoul 07335 (KR)**

(72) Inventors:
  • **LEE, Ilha**
  **Daejeon 34122 (KR)**
  • **JOO, Mun Kyu**
  **Daejeon 34122 (KR)**
  • **KIM, Sarah**
  **Daejeon 34122 (KR)**
  • **JEON, Seoyoung**
  **Daejeon 34122 (KR)**
  • **KWON, Yohan**
  **Daejeon 34122 (KR)**
  • **CHAE, Jonghyun**
  **Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR PRELITHIATING ELECTRODE FOR LITHIUM SECONDARY BATTERY, ELECTRODE INTERMEDIATE, AND LITHIUM SECONDARY BATTERY INCLUDING ELECTRODE**

(57)    The present application relates to a pre-lithiation method of an electrode for a lithium secondary battery, an electrode intermediate, and a lithium secondary battery including an electrode.

[Figure 1]

EP 4 369 434 A1

**Description**

[Technical Field]

This application claims priority to and the benefit of Korean Patent Application No. 10-2022-0010594 filed in the Korean Intellectual Property Office on January 25, 2022, the entire contents of which are incorporated herein by reference.

The present application relates to a pre-lithiation method of an electrode for a lithium secondary battery, an electrode intermediate, and a lithium secondary battery including the electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte solution, and a separator. The negative electrode includes a negative electrode active material for intercalating and deintercalating lithium ions from and to the positive electrode, and silicon-based particles having a high discharge capacity may be used as the negative electrode active material.

In general, a carbon material such as graphite is used for a negative electrode of a lithium secondary battery, but the theoretical capacity density of carbon is 372 mAh/g (833 mAh/cm$^3$). Therefore, in order to improve the energy density of the negative electrode, silicon (Si), tin (Sn), and oxides and alloys thereof, which are alloyed with lithium, are considered as negative electrode materials. Among them, silicon-based materials have attracted attention due to their low cost and high capacity (4200 mAh/g).

However, when a silicon-based negative electrode active material is used, a problem arises in that the initial irreversible capacity is large. In the charging and discharging reaction of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In order to solve the above problem, known is a pre-lithiation method of a silicon negative electrode including a silicon-based negative electrode active material. As the pre-lithiation method, known methods include a method of manufacturing an electrode after lithiation by a physicochemical method such as electrolytic plating, lithium metal transfer, and lithium metal deposition, a method of electrochemically pre-lithiating a negative electrode, and the like.

In order to use the existing electrochemical method, the wet process should be performed within the electrolyte, which poses risks such as fire and explosion, so it was necessary to control an inert environment well. That is, when creating the environment, it is difficult to control conditions such as moisture control by using inert gas in a room where the electrochemical method is performed. In addition, in order to uniformly control the initial irreversible capacity, a rate of pre-lithiation should be slowed down as much as possible using an electrochemical method, so a problem arises in that the production cost increases in the application of the electrochemical method.

In addition, in a lithium metal transfer process of the pre-lithiation process, it is difficult to transfer lithium metal safely and easily, and lithium is not transferred from a transfer laminate, or even if lithium metal is transferred, the highly reactive lithium metal immediately starts reacting with an electrode active material, thereby causing problems such as particle breakage on a surface of an electrode active material layer.

Therefore, it is necessary to research a process condition and a material with which it is possible to easily transfer lithium metal on top of an electrode active material layer during a lithium metal transfer process, and to uniformly pre-lithiate lithium in the electrode active material layer in a more safe and efficient manner when pre-lithiating an electrode.

Citation List

(Patent Literature 1) Japanese Patent Application Publication No. 2009-080971

[Detailed Description of the Invention]

[Technical Problem]

In the pre-lithiation process, the lithium metal transfer process includes a process of transferring lithium metal from the transfer laminate on top of the electrode active material layer. In this case, it was found through research that a degree of transfer of lithium metal can be adjusted depending on adhesive force conditions between the transfer laminate and the electrode. Accordingly, the present application relates to a pre-lithiation method of an electrode for a lithium secondary battery, an electrode intermediate, and a lithium secondary battery including the electrode.

[Technical Solution]

An exemplary embodiment of the present specification provides a pre-lithiation method of an electrode for a lithium secondary battery including: forming an electrode current collector layer and an electrode active material layer on one surface or both surfaces of the electrode current collector layer; and transferring lithium metal onto the electrode active material layer, in which the transferring of the lithium metal includes preparing a transfer laminate in which a base layer, a release layer and a lithium metal are sequentially laminated, laminating the transfer laminate on the electrode active material layer such that a surface of the lithium metal opposite to a surface in contact with the release layer comes into contact with a surface of the electrode active material layer opposite to a surface in contact with the electrode current collector layer, and removing the base layer, and in which a second adhesive force of a contact surface between the electrode current collector layer and the electrode active material layer after applying an external pressure condition of 5 kgf/cm to 150 kgf/cm is higher than a first adhesive force of a contact surface between the base layer and the release layer after applying the external pressure condition of 5 kgf/cm to 150 kgf/cm.

Another exemplary embodiment provides an electrode intermediate including an electrode current collector layer; an electrode active material layer formed on one surface or both surfaces of the electrode current collector layer; and a transfer laminate formed on a surface of the electrode active material layer opposite to a surface in contact with the electrode current collector layer, in which the transfer laminate includes a base layer, a release layer, and a lithium metal sequentially laminated, in which the lithium metal is in contact with the electrode active material layer, in which a first adhesive force of a contact surface between the base layer and the release layer after applying an external pressure condition of 5 kgf/cm to 150 kgf/cm is 10 gf/inch or higher to 150 gf/inch or lower, in which a second adhesive force of a contact surface between the electrode current collector layer and the electrode active material layer after applying the external pressure condition of 5 kgf/cm to 150 kgf/cm is 20 gf/inch or higher to 200 gf/inch or lower, and in which the second adhesive force is higher than the first adhesive force.

Still another exemplary embodiment of the present application provides a lithium secondary battery including a positive electrode for the lithium secondary battery; a negative electrode for the lithium secondary battery; a separator provided between the positive electrode and the negative electrode; and an electrolyte, in which at least one of the positive electrode for the lithium secondary battery and the negative electrode for the lithium secondary battery is an electrode for a lithium secondary battery pre-lithiated according to the method of the present application.

[Advantageous Effects]

The pre-lithiation method of an electrode for a lithium secondary battery according to the exemplary embodiment of the present invention uses a transfer process of lithium metal, and specifically, satisfies the above-described adhesive force conditions for enabling lithium metal to be transferred on top of the electrode active material layer more easily, thereby making it possible to implement excellent surface uniformity and to suppress generation of by-products.

That is, in the exemplary embodiment of the present application, the first adhesive force of the contact surface between the base layer and the release layer after applying the external pressure condition of 5 kgf/cm to 150 kgf/cm is adjusted to the range of 10 gf/inch or higher and 150 gf/inch or lower, and the second adhesive force of the contact surface between the electrode current collector layer and the electrode active material layer after applying the external pressure condition of 5 kgf/cm to 150 kgf/cm is adjusted to the range of 20 gf/inch or higher and 200 gf/inch or lower, so that the base layer can be immediately peeled off from the transfer laminate after the transfer of lithium metal. Accordingly, heat generated during pre-lithiation is smoothly dissipated, so that generation of by-products can be suppressed, as compared with a case where the base layer is maintained laminated during pre-lithiation.

In addition, as the first adhesive force between the base layer and the release layer and the second adhesive force between the electrode current collector layer and the electrode active material layer satisfy the ranges described above, the lithium metal is easily transferred from the transfer laminate, and the reverse transfer problem can be prevented, so that it is possible to prevent delamination of the electrode.

[Brief Description of Drawings]

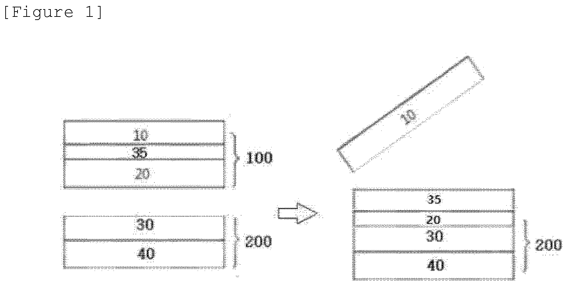

FIG. 1 shows a process of transferring lithium metal to an electrode for a lithium secondary battery according to an exemplary embodiment of the present application.

<Explanation of Reference Numerals and Symbols>

10: base layer
20: lithium metal
30: electrode active material layer
35: release layer
40: electrode current collector layer
100: transfer laminate
200: electrode for lithium secondary battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount under liquid nitrogen temperature (77K) by using BELSORP-mini II of BEL Japan. That is, in the present application, the BET specific surface area may refer to the specific surface area measured by the above measurement method.

In the present specification, "Dn" refers to a particle size distribution, and refers to a particle diameter at the n% point in the cumulative distribution of the number of particles according to the particle diameter. That is, D50 is a particle diameter (average particle diameter, center particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, powder to be measured is dispersed in a dispersion medium, which is then introduced into a commercially available laser diffraction particle size measurement apparatus (for example, Microtrac S3500) in which a difference in diffraction patterns according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, exemplary embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a pre-lithiation method of an electrode for a lithium secondary battery including: forming an electrode current collector layer and an electrode active material layer on one surface or both surfaces of the electrode current collector layer; and transferring lithium metal onto the electrode active material layer, in which the transferring of the lithium metal includes preparing a transfer laminate in which a base layer, a release layer and a lithium metal are sequentially laminated, laminating the transfer laminate on the electrode active material layer such that a surface of the lithium metal opposite to a surface in contact with the release layer comes into contact with a surface of the electrode active material layer opposite to a surface in contact with the electrode current collector layer, and removing the base layer, and in which a second adhesive force of a contact surface between the electrode current collector layer and the electrode active material layer after applying an external pressure condition of 5 kgf/cm to 150 kgf/cm is higher than a first adhesive force of a contact surface between the base layer and the release layer after applying the external pressure condition of 5 kgf/cm to 150 kgf/cm.

In an exemplary embodiment of the present application, the electrode may be a negative electrode or a positive electrode.

The pre-lithiation method of an electrode for a lithium secondary battery according to the exemplary embodiment of the present invention uses a transfer process of lithium metal, and specifically, satisfies the conditions for enabling lithium metal to be transferred on top of the electrode active material layer more easily, thereby making it possible to implement excellent surface uniformity and to suppress generation of by-products.

FIG. 1 shows a process of transferring lithium metal to an electrode for a lithium secondary battery according to an exemplary embodiment of the present application. Specifically, processes of laminating a transfer laminate 100, in which a base layer 10, a release layer 35 and a lithium metal 20 are sequentially laminated, onto an electrode 200 for a lithium secondary battery formed by an electrode current collector layer 40 and an electrode active material layer 30, and then removing the base layer 10 of the transfer laminate 100 can be seen.

In an exemplary embodiment of the present application, there is provided the pre-lithiation method of an electrode for a lithium secondary battery in which the first adhesive force is 10 gf/inch or higher and 150 gf/inch or lower, and the second adhesive force is 20 gf/inch or higher and 200 gf/inch or lower.

In this case, the first adhesive force of the contact surface between the base layer and the release layer satisfies a range of 10 gf/inch or higher and 150 gf/inch or lower, and the second adhesive force of the contact surface between the electrode current collector layer and the electrode active material layer satisfies a range of 20 gf/inch or higher and 200 gf/inch or lower. Accordingly, the base layer of the transfer laminate can be easily removed during the transfer of lithium metal. That is, problems related to transferability, such as reverse transfer in the transfer process of lithium metal of the related art, are solved by adjusting the adhesive force, as described above.

In an exemplary embodiment of the present application, the first adhesive force and the second adhesive force correspond to expressions for classifying a standard of a surface on which the adhesive force is measured.

The first adhesive force was measured at an angle of 90° and a speed of 300 mm/minute using a Nitto 31B tape by a peel strength measuring instrument, and the second adhesive force was measured at an angle of 90° and a speed of 300 mm/minute using a 3M 9070 tape by the peel strength measuring instrument.

In particular, the first adhesive force and the second adhesive force are forces measured after applying an external pressure condition of 5 kgf/cm to 150 kgf/cm. This may refer to a pressure condition when laminating the transfer laminate onto the electrode active material layer. That is, the lamination condition may refer to a condition after a process progresses at a running speed of 1 mpm to 50 mpm or less in a state where an external pressure of 5 kgf/cm to 150 kgf/cm is applied between two rolls after the transfer laminate is laminated on top of the electrode active material layer. In particular, the unit of kgf/cm is defined as a value obtained by dividing a load between two rolls by a unit length of a sample. The first adhesive force and the second adhesive force satisfy the above range, so that the base layer can be easily peeled off even under lamination conditions.

In an exemplary embodiment of the present application, the first adhesive force may satisfy a range of 10 gf/inch or higher and 150 gf/inch or lower, preferably 10 gf/inch or higher and 130 gf/inch or lower, and more preferably 50 gf/inch or higher and 110 gf/inch or lower.

In an exemplary embodiment of the present application, the second adhesive force may satisfy a range of 20 gf/inch or higher and 200 gf/inch or lower, preferably 50 gf/inch or higher and 190 gf/inch or lower, and more preferably 120 gf/inch or higher and 180 gf/inch or lower.

In an exemplary embodiment of the present application, the first adhesive force and the second adhesive force may have the above ranges, and the second adhesive force may be formed higher than the first adhesive force. The above conditions are satisfied, so that the base layer can be immediately peeled off from the transfer laminate after lithium metal is transferred. Accordingly, heat generated during pre-lithiation is smoothly dissipated, so that generation of by-products can be suppressed, as compared with a case where the base layer is maintained laminated during pre-lithiation.

The first adhesive force is formed according to a drying condition, a composition of the release layer, and a temperature of the deposition process of lithium metal during formation of the release layer. The above conditions are adjusted to adjust the adhesive force range to the above range, so that pre-lithiation of the electrode for a lithium secondary battery can progress more easily.

In an exemplary embodiment of the present application, there is provided the pre-lithiation method of an electrode for a lithium secondary battery in which the first adhesive force and the second adhesive force satisfy a range of Equation 1 below.

20 gf/inch ≤ second adhesive force - first adhesive force ≤ 150 gf/inch                    [Equation 1]

The pre-lithiation method of an electrode for a lithium secondary battery according to the present application satisfies the ranges of the first adhesive force and the second adhesive force as described above, respectively, and also satisfies the range of Equation 1 above. When the above conditions are satisfied, adhesion between the base layer and the release layer is excellent during formation of the transfer laminate, so that delamination of the transfer laminate can be prevented during the manufacturing process, and the transfer of lithium metal can progress more easily.

In an exemplary embodiment of the present application, a ratio of the first adhesive force/the second adhesive force may be 0.1 or greater and 0.9 or less.

In addition, in an exemplary embodiment of the present application, a ratio of the second adhesive force/the first adhesive force may satisfy a range of greater than 1 and 2 or less.

In an exemplary embodiment of the present application, there is provided the pre-lithiation method of an electrode for a lithium secondary battery in which the first adhesive force is lower than an adhesive force of a contact surface between the release layer and the lithium metal.

That is, when the above range is satisfied, the release layer and the lithium metal can be transferred on top of a negative electrode together, and thus the release layer can serve to protect the highly reactive lithium metal from the air.

Hereinafter, specific details of the pre-lithiation method of an electrode for a lithium secondary battery of the present invention will be described.

The pre-lithiation method of an electrode for a lithium secondary battery according to an exemplary embodiment of the present application may include forming an electrode current collector layer and an electrode active material layer on one surface or both surfaces of the electrode current collector layer.

In an exemplary embodiment of the present application, there is provided the pre-lithiation method of an electrode for a lithium secondary battery in which the forming of the electrode current collector layer and the electrode active material layer on one surface or both surfaces of the electrode current collector layer includes coating an electrode slurry including an electrode active material layer composition on one surface or both surfaces of the electrode current collector layer, and in which the electrode active material layer composition includes one or more selected from the group consisting of an electrode active material, an electrode conductive material, and an electrode binder.

In this case, there is provided the pre-lithiation method of an electrode for a lithium secondary battery in which the electrode active material includes a silicon-based active material, and the silicon-based active material includes one or more selected from the group consisting of $SiO_x$ (x=0), $SiO_x$ (0<x<2), SiC, and a Si alloy.

In an exemplary embodiment of the present application, the electrode may be a negative electrode, and hereinafter, the pre-lithiation method of a negative electrode for a lithium secondary battery will be described.

The pre-lithiation method of an electrode for a lithium secondary battery according to an exemplary embodiment of the present application may include forming a negative electrode current collector layer and a negative electrode active material layer on one surface or both surfaces of the negative electrode current collector layer.

In an exemplary embodiment of the present application, the negative electrode current collector layer generally has a thickness of 1 um to 100 um. The negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In an exemplary embodiment of the present application, the negative electrode current collector layer may have a thickness of 1 um or greater and 100 $\mu$m or less, and the negative electrode active material layer may have a thickness of 20 $\mu$m or greater and 500 $\mu$m or less.

However, the thicknesses may be variously modified depending on a type and use of the negative electrode used, and are not limited thereto.

In an exemplary embodiment of the present application, there is provided the pre-lithiation method of an electrode for a lithium secondary battery in which the forming of the negative electrode current collector layer and the negative electrode active material layer on one surface or both surfaces of the negative electrode current collector layer includes coating a negative electrode slurry including a negative electrode active material layer composition on one surface or both surfaces of the negative electrode current collector layer, and in which the negative electrode active material layer composition includes one or more selected from the group consisting of a negative electrode active material, a negative electrode conductive material, and a negative electrode binder.

In an exemplary embodiment of the present application, the negative electrode slurry may include a negative electrode active material layer composition, and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode active material layer composition included in the negative electrode slurry, and may mean a content of the negative electrode active material composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode active material layer composition is minimized to efficiently form the negative electrode active material layer.

In an exemplary embodiment of the present application, the slurry solvent is not limited thereto as long as it can dissolve the negative electrode active material layer composition, but specifically, distilled water may be used.

A negative electrode according to an exemplary embodiment of the present application may be formed by coating and drying the negative electrode slurry on the negative electrode current collector layer.

Through the drying step, the slurry solvent in the negative electrode slurry may be dried.

In an exemplary embodiment of the present application, the negative electrode active material layer composition may include one or more selected from the group consisting of a negative electrode active material, a negative electrode conductive material, and a negative electrode binder.

In an exemplary embodiment of the present application, a silicon-based active material may be used as the negative electrode active material, or a negative electrode including both a silicon-based active material and a carbon-based active material may be used. In this case, a lithium secondary battery having further improved overall performance, such as cycle life characteristics, can be manufactured.

In an exemplary embodiment of the present application, the silicon-based active material may include one or more selected from the group consisting of Si particles, $SiO_x$ ($0<x<2$), SiC, and a Si alloy.

In an exemplary embodiment of the present application, the silicon-based active material may include one or more selected from the group consisting of $SiO_x$ ($x=0$) and $SiO_x$ ($0<x<2$), and may include the $SiO_x$ ($x=0$) in an amount of 70 parts by weight or more on the basis of 100 parts by weight of the silicon-based active material.

In another exemplary embodiment, $SiO_x$ ($x=0$) may be included in amount of 70 parts by weight or more, preferably 80 parts by weight or more, and more preferably 90 parts by weight or more, and 100 parts by weight or less, preferably 99 parts by weight or less, and more preferably 95 parts by weight or less on the basis of 100 parts by weight of the silicon-based active material.

In an exemplary embodiment of the present application, the silicon-based active material may particularly use pure silicon (Si) as the silicon-based active material. The use of pure silicon (Si) as the silicon-based active material may mean that, on the basis of 100 parts by weight of the total silicon-based active material as described above, pure Si particles ($SiO_x$ ($x=0$)) not bonded to other particles or elements are included within the above range.

In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In the present invention, in order to solve the above problems, the negative electrode of the lithium secondary battery is pre-lithiated to solve the initial irreversible capacity problem. Specifically, in the pre-lithiation process, during the lithium transfer process, lithium metal can be easily transferred from a transfer laminate, and production of by-products is suppressed so that lithium in the negative electrode active material layer can be uniformly pre-lithiated.

An average particle diameter (D50) of the silicon-based active material of the present invention may be 5 um to 10 um, specifically 5.5 um to 8 $\mu$m, and more specifically 6 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value, a contact area between the silicon particles and the conductive material is excellent due to the composite made of the conductive material and the binder in the negative electrode slurry, so that a continuing possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density nonuniformity phenomenon during charging and discharging can be prevented.

In an exemplary embodiment of the present application, the silicon-based active material generally has a characteristic BET specific surface area. The BET specific surface area of the silicon-based active material is preferably 0.01 to 150.0 $m^2$/g, more preferably 0.1 to 100.0 $m^2$/g, particularly preferably 0.2 to 80.0 $m^2$/g, and most preferably 0.2 to 18.0 $m^2$/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In an exemplary embodiment of the present application, the silicon-based active material may be included in an amount of 60 parts by weight or more, on the basis of 100 parts by weight of the negative electrode active material layer composition.

In another exemplary embodiment the silicon-based active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less on the basis of 100 parts by weight of the negative electrode active material layer composition.

The negative electrode active material layer composition according to the present application includes both a negative electrode conductive material and a negative electrode binder capable of controlling the volume expansion rate during charging and discharging even when the silicon-based active material having a significantly high capacity is used within the above range. Accordingly, even when the silicon-based active material is included within the above range, the negative electrode active material layer composition does not degrade performance of the negative electrode and has excellent output characteristics in charging and discharging.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Equation A below, in which A is an area and P is a boundary line.

$$[\text{Equation A}]$$

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery. Therefore, a type of the negative electrode conductive material that is used together with the silicon-based active material is important.

In an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a material that may be used so as to improve conductivity of the negative electrode and has conductivity without causing a chemical change. Specifically, the point-like conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less.

In an exemplary embodiment of the present application, a particle diameter of the point-like conductive material may be 10 nm to 100 nm, preferably 20 nm to 90 nm, and more preferably 40 nm to 60 nm.

In an exemplary embodiment of the present application, the negative electrode conductive material may include a planar conductive material.

The planar conductive material can serve to improve conductivity by increasing surface contact among silicon particles in the negative electrode, and at the same time, to suppress the disconnection of the conductive path due to the volume expansion, and is used as a concept including as a bulk-type conductive material or a plate-like conductive material.

In an exemplary embodiment of the present application, the planar conductive material may include at least one selected from the group consisting of plate-like graphite, graphene, graphene oxide, and graphite flakes, and preferably may be plate-like graphite.

In an exemplary embodiment of the present application, the average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided a negative electrode active material layer composition in which the planar conductive material has D10 of 0.5 um or greater and 1.5 um or less, D50 of 2.5 um or greater and 3.5 um or less and D90 of 7.0 um or greater and 15.0 um or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 m$^2$/g or greater.

In another exemplary embodiment, the planar conductive material may have a BET specific surface area of 5 m$^2$/g or greater and 500m$^2$/ g or less, preferably 5 m$^2$/g or greater and 300 m$^2$/g or less, and more preferably 5 m$^2$/g or greater and 250 m$^2$/g or less.

In another exemplary embodiment, the planar conductive material is a planar conductive material with a high specific surface area, and the BET specific surface area may satisfy a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may satisfy a range of 5 m$^2$/g or greater and 40 m$^2$/g or less, preferably 5 m$^2$/g or greater and 30 m$^2$/g or less, and more preferably 5 m$^2$/g or greater and 25 m$^2$/g or less.

Other negative electrode conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may be included in an amount of 10 parts by weight or more and 40 parts by weight or less on the basis of 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 15 parts by weight or more and 25 parts by weight or less on the basis of 100 parts by weight of the negative electrode active material layer composition.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer at the time of roll-pressing, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed and used into a spherical or point-like shape so as to facilitate storage and release of lithium ions.

On the other hand, the planar conductive material that is used as the negative electrode conductive material is a material having a plane or plate shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high capacity characteristics with respect to storing and releasing lithium, and serves to store and release all lithium ions transferred from the positive electrode.

On the other hand, in the present application, the use of a carbon-based active material as an active material means that the carbon-based active material is processed into a point or spherical shape and used as a material for storing or releasing lithium.

That is, in an exemplary embodiment of the present application, artificial graphite or natural graphite, which is a carbon-based active material, may have a BET specific surface area that satisfies a range of 0.1 $m^2$/g or greater and 4.5 $m^2$/g or less. In addition, plate-like graphite, which is a planar conductive material, has a planar shape, and a BET specific surface area thereof may be 5 $m^2$/g or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The binder according to the exemplary embodiment of the present application serves to hold the negative electrode active material and the negative electrode conductive material in order to prevent distortion and structural deformation of the negative electrode structure in volume expansion and relaxation of the silicon-based active material. When such roles are satisfied, all of the general negative electrode binders can be applied. Specifically, a water-based binder may be used, and more specifically, a PAM-based binder may be used.

In an exemplary embodiment of the present application, the negative electrode binder may be included in an amount of 30 parts by weight or less, preferably 25 parts by weight or less, more preferably 20 parts by weight or less, and 1 parts by weight or more, and 3 parts by weight or more, on the basis of 100 parts by weight of the negative electrode active material layer composition.

In an exemplary embodiment of the present application, the electrode may be a positive electrode, and hereinafter, a pre-lithiation method of a positive electrode for a lithium secondary battery will be described. Here, the same description as the above-described pre-lithiation method of a negative electrode for a lithium secondary battery may be applied, except the positive electrode.

The pre-lithiation method of an electrode for a lithium secondary battery according to an exemplary embodiment of the present application may include forming a positive electrode current collector layer and a positive electrode active material layer on one surface or both surfaces of the positive electrode current collector layer.

In an exemplary embodiment of the present application, the positive electrode current collector layer is not particularly limited as long as it has conductivity without causing a chemical change in a battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 3 to 500 um, and a surface of the positive electrode current collector layer may be formed with microscopic irregularities to enhance an adhesive force of the positive electrode active material. For example, the positive electrode current collector layer may be used in various forms such as a film, a sheet, a foil, a net, a porous body, a foamed body, and a non-woven fabric body.

The thickness of the positive electrode current collector layer may be variously modified depending on a type and a use of the positive electrode used, and is not limited thereto.

In an exemplary embodiment of the present application, there is provided the pre-lithiation method of an electrode for a lithium secondary battery in which the forming of the positive electrode current collector layer and the positive electrode active material layer on one surface or both surfaces of the positive electrode current collector layer includes coating a positive electrode slurry including a positive electrode active material layer composition on one surface or both surfaces of the positive electrode current collector layer, and in which the positive electrode active material layer composition includes one or more selected from the group consisting of a positive electrode active material, a positive electrode conductive material, and a positive electrode binder.

In an exemplary embodiment of the present application, the above description of the negative electrode slurry may be likewise applied to the positive electrode slurry, except the positive electrode.

In an exemplary embodiment of the present application, the positive electrode active material layer composition may include one or more selected from the group consisting of a positive electrode active material, a positive electrode conductive material, and a positive electrode binder.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4 (0 \leq c1 \leq 0.33)$, $LiMnO_3$, $LiMn_2O_2$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve adhesion between particles of the positive electrode active material and adhesive force between the positive electrode active material and the positive electrode current collector. Specific examples may include polyvinylidene fluoride (PVDF), polyvinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

In addition, the above description of the negative electrode active material layer composition may be likewise applied to the contents of the positive electrode active material, the positive electrode conductive material, and the positive electrode binder included in the positive active material layer composition.

In an exemplary embodiment of the present application, the pre-lithiation method of an electrode for a lithium secondary battery may include transferring lithium metal onto the electrode active material layer.

In general, the pre-lithiation process chemically or physically pre-lithiates lithium metal on an electrode, and specifically, may be carried out by a lithium metal transfer process, lithium metal powder deposition, an electrochemical process, or a lithium metal deposition process, and the pre-lithiation process according to the present application may include a lithium metal transfer process.

The lithium metal transfer process has a feature capable of transferring highly reactive lithium metal on top of the electrode active material layer more stably. In this case, a process capable of easily transferring lithium metal from the transfer laminate on top of the electrode active material layer is required.

In an exemplary embodiment of the present application, the transferring of the lithium metal may include preparing a transfer laminate in which a base layer, a release layer and a lithium metal are sequentially laminated; laminating the transfer laminate onto the electrode active material layer so that a surface of the lithium metal opposite to a surface in contact with the release layer comes into contact with a surface of the electrode active material layer opposite to a surface in contact with the electrode current collector layer; and removing the base layer.

In an exemplary embodiment of the present application, there is provided the pre-lithiation method of an electrode for a lithium secondary battery in which the preparing of the transfer laminate in which the base layer, the release layer and the lithium metal are sequentially laminated includes coating and laminating a release layer on the base layer, and depositing the lithium metal on the release layer, in which the depositing of the lithium metal includes adjusting a deposition temperature, and in which the adjusting of the deposition temperature includes adjusting a temperature of a surface opposite to a surface on which the lithium metal is deposited to -30°C or higher and 10°C or lower to form a temperature of the transfer laminate to 80°C or lower.

In this case, when depositing lithium metal, a temperature of a surface on which the base layer is held is adjusted with respect to the transfer laminate in which the base layer and the release layer are laminated, and the corresponding surface can be defined as the surface opposite to the surface on which lithium metal is deposited, and can also be defined as a surface of the base layer opposite to a surface in contact with the release layer. That is, during lithium metal deposition, the temperature of the surface on which the base layer is attached (held) can be specifically adjusted, and the adjusting value is formed within the range of -30°C or higher and 10°C or lower, and a temperature of a surface on which lithium metal is deposited changes according to the thickness of the transfer laminate. Accordingly, forming the temperature of the transfer laminate to 80°C or lower has the same meaning as forming a temperature of a surface, on which lithium metal is deposited, of the transfer laminate to 80°C or lower.

In an exemplary embodiment of the present application, there is provided the pre-lithiation method of an electrode for a lithium secondary battery including coating and laminating a release layer on the base layer, and then drying the release layer, in which the drying is performed at 30°C to 100°C for 5 minutes to 1 hour.

That is, in the present application, the range of the first adhesive force may be formed to a specific range by adjusting the deposition temperature condition in the depositing described above and the drying temperature. Accordingly, during pre-lithiation in the transfer process, the transfer of lithium metal can be facilitated.

In an exemplary embodiment of the present application, the first adhesive force also depends on a drying condition of the release layer and a type (composition) of the release layer. In particular, when the drying temperature condition is increased, the adhesive force may be improved. In particular, when the drying temperature condition according to the present application is satisfied, the range of the first adhesive force range described above may be provided.

In an exemplary embodiment of the present application, the deposition method for depositing the lithium metal on the base layer having the release layer formed thereon may be selected from evaporation deposition, chemical vapor deposition (CVD) and physical vapor deposition, but is not limited thereto, and various deposition methods that are used in the art may be used.

In this case, a lamination process may be performed by roll pressing the electrode for a lithium secondary battery on which the transfer laminate is laminated by applying a load of 5 kgf/cm to 500 kgf/cm. Thereafter, a process of removing the base layer is included, and upon removal, the range of each adhesive force according to the present application is satisfied, so that problems such as reverse transfer of lithium metal do not occur.

In an exemplary embodiment of the present application, any base layer can be used without limitation as long as it has features capable of withstanding process conditions such as high temperature in the depositing of the lithium metal and preventing a reverse peeling problem that lithium metal is transferred onto the base layer during a winding process for transferring the deposited lithium metal.

Specifically, in an exemplary embodiment of the present application, the base layer may be one or more selected from the group consisting of polyethylene terephthalate (PET), polyimide (PI), poly(methylmethacrylate)(PMMA), polypropylene, polyethylene and polycarbonate.

In an exemplary embodiment of the present application, a thickness of the base layer may be 1 um or greater and 300 um or less, and may satisfy a range of 5 um or greater and 200 um or less, and 10 um or greater and 100 um or less.

In an exemplary embodiment of the present application, a thickness of the lithium metal may be 1 um or greater and 10 um or less, and preferably may satisfy a range of 3 um or greater and 10 um or less.

When the thicknesses of the base layer and the lithium metal satisfy the above ranges, the transfer of the lithium metal to the electrode active material layer can occur efficiently and the reverse transfer can be prevented.

In an exemplary embodiment of the present application, there is provided the pre-lithiation method of an electrode for a lithium secondary battery in which the release layer is included on a surface in contact with the base layer and the lithium metal of the transfer laminate, in order to improve the peelability of the lithium metal, to secure transferability to the electrode active material layer and to serve as a protective layer after transfer of the lithium metal.

That is, the base layer may have a release layer formed on at least one surface, or may have release layers formed on both surfaces. The release layer makes it possible to prevent a reverse peeling problem that lithium metal is transferred onto the base layer during a winding process for transferring deposited lithium metal to an electrode, and also makes it possible to easily separate the base layer after transferring lithium metal onto the electrode active material layer.

The release layer may include one or more species selected from the group consisting of silicon-modified polyester in which a silicon chain is graft-linked to a polyester main chain, an acrylic resin, Si, melamine, and fluorine.

In an exemplary embodiment of the present application, the release layer may include polymethyl methacrylate (PMMA).

The release layer may be used without limitation to the type thereof as long as it satisfies the range of the first adhesive force.

In an exemplary embodiment of the present application, the release layer may be formed by a coating method. For example, the coating method may be a method selected from the group consisting of dip coating, spray coating, spin coating, die coating, gravure coating, micro-gravure coating, comma coating, and roll coating, but is not limited thereto. That is, various coating methods that can be used to form a coating layer in the art can be used.

In an exemplary embodiment of the present application, there is provided laminating the transfer laminate onto the electrode active material layer so that a surface of the lithium metal opposite to a surface in contact with the release layer comes into contact with a surface of the electrode active material layer opposite to a surface in contact with the electrode current collector layer.

In this case, the laminating may be performed under a temperature condition of 20°C to 90°C and a pressurization condition of 5 kgf/cm to 500 kgf/cm.

In an exemplary embodiment of the present application, the laminating may satisfy a pressurization condition of 5 kgf/cm to 500 kgf/cm, and preferably 10 kgf/cm to 150 kgf/cm.

However, the temperature condition may be omitted in the laminating. In particular, when the laminating satisfies the pressurization condition described above, the rate of pre-lithiation of lithium metal can be smoothly controlled, and accordingly, generation of a large amount of oxides and nitrides during the transfer process can be suppressed. In addition, as the pressurization range is satisfied, the lithium metal is smoothly transferred on top of the electrode active material layer, so that the problem of reverse transfer does not also occur.

After the laminating, pre-lithiation of the highly reactive lithium metal and the electrode active material layer may progress, or the reaction may not progress and pre-lithiation may progress during assembling of a battery.

In an exemplary embodiment of the present application, there is provided the pre-lithiation method of an electrode for a lithium secondary battery including pre-lithiating the electrode active material layer after removing the base layer, in which in the pre-lithiating of the electrode active material layer, the electrode active material layer is pre-lithiated within 30 minutes to 24 hours after transferring the lithium metal.

In the transfer process of lithium metal of the related art, there is a problem in that it is difficult to peel off the base layer in the progression of pre-lithiation after laminating the transfer laminate. Accordingly, the pre-lithiation progresses without the base layer being removed, and the heat generated during pre-lithiation is blocked by the base layer and is not thus dissipated, resulting in formation of by-products on the surface during pre-lithiation of lithium metal. In the pre-lithiation method of an electrode for a lithium secondary battery according to the present application, the base layer can be easily peeled off immediately after laminating the transfer laminate by adjusting the adhesive force range as described above, so that the generation of by-products during pre-lithiation can be suppressed.

In an exemplary embodiment of the present application, there is provided the pre-lithiation method of an electrode for a lithium secondary battery in which the first adhesive force is lower than an adhesive force of a contact surface between the release layer and the lithium metal.

The above range of the adhesive force is satisfied, so that the release layer and the lithium metal are transferred together on top of the electrode active material layer, rather than the lithium metal being transferred solely. In this case, the release layer can also serve as a protective layer capable of preventing a reaction of the highly reactive lithium metal in the air.

In an exemplary embodiment of the present application, pre-lithiating the electrode active material layer may be included.

There is provided a manufacturing method of an electrode for a lithium secondary battery in which in the pre-lithiating of the electrode active material layer, the electrode active material layer is pre-lithiated within 30 minutes to 24 hours under conditions of 25°C and 1 atm.

The pre-lithiating is setting a condition for diffusing lithium metal into the electrode active material layer, and whether the pre-lithiation is completed can be determined depending on whether lithium on top of the electrode active material layer has completely disappeared.

In the exemplary embodiment of the present application, the activation reaction time may be 30 minutes to 24 hours, and preferably 1 hour to 2 hours.

In an exemplary embodiment of the present application, there is provided the pre-lithiation method of an electrode for a lithium secondary battery in which after pre-lithiating the electrode active material layer, the lithium metal is pre-lithiated into the electrode active material layer to form a pre-lithiated electrode, and an adhesive force between the release layer and the pre-lithiated electrode is 1 gf/inch or lower.

Through the pre-lithiating, the lithium metal on the electrode active material layer is all pre-lithiated into the electrode active material layer, and then the adhesive force between the release layer and the pre-lithiated electrode satisfies the above range, which means that no bond is formed between the release layer and the electrode active material layer.

An exemplary embodiment of the present application provides an electrode intermediate including an electrode current collector layer; an electrode active material layer formed on one surface or both surfaces of the electrode current collector layer; and a transfer laminate formed on a surface of the electrode active material layer opposite to a surface in contact with the electrode current collector layer, in which the transfer laminate includes a base layer, a release layer, and a lithium metal sequentially laminated, in which the lithium metal is in contact with the electrode active material layer, in which a first adhesive force of a contact surface between the base layer and the release layer after applying an external pressure condition of 5 kgf/cm to 150 kgf/cm is 10 gf/inch or higher to 150 gf/inch or lower, in which a second adhesive force of a contact surface between the electrode current collector layer and the electrode active material layer after applying the external pressure condition of 5 kgf/cm to 150 kgf/cm is 20 gf/inch or higher to 200 gf/inch or lower, and in which the second adhesive force is higher than the first adhesive force.

In the electrode intermediate, the above descriptions may be applied to each configuration.

An exemplary embodiment of the present application provides a lithium secondary battery including a positive electrode for the lithium secondary battery; a negative electrode for the lithium secondary battery; a separator provided between the positive electrode and the negative electrode; and an electrolyte, in which at least one of the positive electrode for the lithium secondary battery and the negative electrode for the lithium secondary battery is an electrode for a lithium secondary battery pre-lithiated according to the method of the present application.

In this case, the release layer 35 used during pre-lithiation may be removed as described above, and accordingly, does not remain on top of the electrode, thereby preventing an unnecessary increase in resistance. That is, the release layer improves transferability, can be used to protect lithium metal before pre-lithiation, and can be removed before injection of the electrolyte solution.

In an exemplary embodiment of the present application, the electrolyte solution may include an organic liquid electrolyte solution, an inorganic liquid electrolyte, a solid polymer electrolyte, a gel-type polymer electrolyte solution, a solid inorganic electrolyte solution, or a molten-type inorganic electrolyte solution that may be used in the manufacturing of the lithium secondary battery, but is not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving lifetime characteristics of the battery, suppressing a decrease in battery capacity, improving discharge capacity of the battery, and the like, in addition to the above-described electrolyte solution components.

An exemplary embodiment of the present invention provides a battery module including the lithium secondary battery as a unit cell, and a battery pack including the same. Since the battery module and the battery pack include the secondary battery having high capacity, high rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Examples>**

**<Manufacture of Transfer Laminate>**

A release layer satisfying the conditions of Table 1 below, which can improve transferability, was coated and formed on top of a PET layer. Thereafter, lithium metal was deposited in a level of 6 um on top of the PET base by using a PVD method, so that a transfer laminate was manufactured.

**<Manufacture of Negative Electrode>**

Si (average particle diameter (D50): 3.5 $\mu$m) serving as a silicon-based active material, denka black serving as a conductive material, SBR serving as a binder, and CMC serving as a thickener were added to distilled water serving as a solvent for forming a negative electrode slurry in a weight ratio of 80:15.8:3:1.2 to manufacture a negative electrode slurry (solid content concentration: 25 wt.%).

As a mixing method, the conductive material, the binder, the thickener, and water were dispersed at 2500 rpm for 30 minutes by using a homo mixer, and then the active material was added and dispersed therein at 2500 rpm for 30 minutes to manufacture a slurry.

The negative electrode slurry was coated on both surfaces of a copper current collector (thickness: 15 um) serving as a negative electrode current collector with a loading amount of 85 mg/25 cm$^2$, roll-pressed, and dried in a vacuum oven at 130°C for 10 hours to form a negative electrode active material layer (thickness: 33 pm), which was prepared as a negative electrode (thickness of negative electrode: 41 um, porosity of negative electrode: 40.0%).

Then, in order to transfer the transfer laminate to the negative electrode active material layer, the lithium metal of the transfer laminate was placed on top of the negative electrode active material layer, which was then subjected to roll-pressing while applying a load in Table 1 with an external pressurization condition to join the lithium metal and the negative electrode active material layer. Immediately after lamination, the PET layer of the transfer laminate was removed, and the negative electrode was pre-lithiated.

In this case, the evaluation results of each adhesive force and pre-lithiation are shown in Table 1 below.

[Table 1]

| | External pressurization condition | First adhesive force (gf/inch) | Second adhesive force (gf/inch) | Pre-lithiation rate (minute) | Transfer ability |
|---|---|---|---|---|---|
| Example 1 | 10 kgf/cm | 53.7 | 120 | 120 | ○ |
| Example 2 | 40 kgf/cm | 69.0 | 120 | 120 | ○ |
| Example 3 | 60 kgf/cm | 104.0 | 120 | 120 | △ |
| Comparative Example 1 | 60 kgf/cm | 300 | 120 | 30 | X |
| Comparative Example 2 | 40 kgf/cm | - (without release layer) | 120 | 5 | X |

In Table 1, for the pre-lithiation rate, the time from immediately after the PET layer of the transfer laminate was removed until all lithium metal disappeared on top of the negative electrode active material layer was measured, and for the transferability, when the PET layer was peeled off from the transfer laminate without delamination between the lithium metal and the surface of the negative electrode active material layer, it was denoted with O, when delamination occurred between the lithium metal and the surface of the negative electrode active material layer, it was denoted with X, and when the delamination partially occurred but the by-products were not generated in the pre-lithiation process, it was denoted with △.

In addition, the first adhesive force was measured at an angle of 90° and a speed of 300 mm/minute using a Nitto 31B tape by a peel strength measuring instrument, and the second adhesive force was measured at an angle of 90° and a speed of 300 mm/minute using a 3M 9070 tape by the peel strength measuring instrument.

As can be seen in Table 1, in Examples 1 to 3, the first adhesive force of the contact surface between the base layer and the release layer after applying the external pressure condition of 20 kgf/cm to 150 kgf/cm was adjusted to the range of 10 gf/inch or higher and 150 gf/inch or lower, and the second adhesive force of the contact surface between the negative electrode current collector layer and the negative electrode active material layer after applying the external pressure condition of 20 kgf/cm to 150 kgf/cm was adjusted to the range of 20 gf/inch or higher and 200 gf/inch or lower. Accordingly, it could be confirmed that the base layer could be immediately peeled off from the transfer laminate after the transfer of lithium metal, and therefore, the transferability was excellent. Accordingly, it could be confirmed that the heat generated during pre-lithiation was smoothly dissipated, so that generation of by-products could be suppressed, as compared with a case where the base layer was maintained laminated during pre-lithiation, and the pre-lithiation progressed easily.

Comparative Example 1 corresponds to a case in which the first adhesive force was out of the range of the present application, and the first adhesive force was formed higher than the second adhesive force. It could be confirmed that the PET film was not easily peeled off after the transfer laminate was laminated, and therefore, the transferability was not good. Accordingly, it could be confirmed that the pre-lithiation did not progress to the desired extent due to the lithium metal delaminated during the pre-lithiation, and many by-products were also generated.

Comparative Example 2 corresponds to a case in which the release layer itself satisfying the first adhesive force according to the present application was not used. In this case, as in Comparative Example 1, it could be confirmed that the transferability was not good and the pre-lithiation rate could not also be easily adjusted due to difficulty in removing the PET layer.

**Claims**

1. A pre-lithiation method of an electrode for a lithium secondary battery, the pre-lithiation method comprising:

   forming an electrode current collector layer and an electrode active material layer on one surface or both surfaces of the electrode current collector layer; and
   transferring lithium metal onto the electrode active material layer,
   wherein the transferring of the lithium metal comprises preparing a transfer laminate in which a base layer, a release layer and a lithium metal are sequentially laminated, laminating the transfer laminate onto the electrode active material layer so that a surface of the lithium metal opposite to a surface in contact with the release layer comes into contact with a surface of the electrode active material layer opposite to a surface in contact with the electrode current collector layer; and removing the base layer, and
   wherein a second adhesive force of a contact surface between the electrode current collector layer and the electrode active material layer after applying an external pressure condition of 5 kgf/cm to 150 kgf/cm is higher than a first adhesive force of a contact surface between the base layer and the release layer after applying the external pressure condition of 5 kgf/cm to 150 kgf/cm.

2. The pre-lithiation method of claim 1, wherein the first adhesive force is 10 gf/inch or higher and 150 gf/inch or lower, and wherein the second adhesive force is 20 gf/inch or higher and 200 gf/inch or lower.

3. The pre-lithiation method of claim 1, wherein the preparing of the transfer laminate in which the base layer, the release layer and the lithium metal are sequentially laminated comprises coating and laminating the release layer on the base layer, and depositing the lithium metal on the release layer,

   wherein the depositing of the lithium metal comprises adjusting a deposition temperature, and
   wherein the adjusting of the deposition temperature comprises adjusting a temperature of a surface opposite to a surface on which the lithium metal is deposited to -30°C or higher and 10°C or lower to form a temperature of the transfer laminate to 80°C or lower.

4. The pre-lithiation method of claim 1, wherein the laminating is performed under a temperature condition of 20°C to 90°C and a pressurization condition of 5 kgf/cm to 500 kgf/cm.

5. The pre-lithiation method of claim 1, wherein the first adhesive force and the second adhesive force satisfy a range of Equation 1 below:

   $$20 \text{ gf/inch} \leq \text{second adhesive force} - \text{first adhesive force} \leq 150 \text{ gf/inch}. \qquad \text{[Equation 1]}$$

6. The pre-lithiation method of claim 1, wherein the first adhesive force is lower than an adhesive force of a contact surface between the release layer and the lithium metal.

7. The pre-lithiation method of claim 1, wherein a thickness of the lithium metal is 1 um or greater and 10 $\mu$m or less.

8. The pre-lithiation method of claim 1, wherein the release layer comprises one or more selected from the group consisting of silicon-modified polyester in which a silicon chain is graft-linked to a polyester main chain, an acrylic resin, Si, melamine, and fluorine.

9. The pre-lithiation method of claim 1, comprising pre-lithiating the electrode active material layer after removing the base layer,
wherein in the pre-lithiating of the electrode active material layer, the electrode active material layer is pre-lithiated within 30 minutes to 24 hours after transferring the lithium metal.

10. The pre-lithiation method of claim 1, wherein the forming of the electrode current collector layer and the electrode active material layer on one surface or both surfaces of the electrode current collector layer comprises coating an electrode slurry comprising an electrode active material layer composition on one surface or both surfaces of the electrode current collector layer, and
wherein the electrode active material layer composition comprises one or more selected from the group consisting of an electrode active material, an electrode conductive material, and an electrode binder.

11. The pre-lithiation method of claim 10, wherein the electrode active material comprises a silicon-based active material, and
wherein the silicon-based active material comprises one or more selected from the group consisting of $SiO_x$ (x=0), $SiO_x$ (0<x<2), SiC, and a Si alloy.

12. An electrode intermediate comprising:

an electrode current collector layer;
an electrode active material layer formed on one surface or both surfaces of the electrode current collector layer; and
a transfer laminate formed on a surface of the electrode active material layer opposite to a surface in contact with the electrode current collector layer,
wherein the transfer laminate comprises a base layer, a release layer, and a lithium metal sequentially laminated,
wherein the lithium metal is in contact with the electrode active material layer,
wherein a first adhesive force of a contact surface between the base layer and the release layer after applying an external pressure condition of 5 kgf/cm to 150 kgf/cm is 10 gf/inch or higher to 150 gf/inch or lower,
wherein a second adhesive force of a contact surface between the electrode current collector layer and the electrode active material layer after applying the external pressure condition of 5 kgf/cm to 150 kgf/cm is 20 gf/inch or higher to 200 gf/inch or lower, and
wherein the second adhesive force is higher than the first adhesive force.

13. A lithium secondary battery comprising:

a positive electrode for the lithium secondary battery;
a negative electrode for the lithium secondary battery;
a separator provided between the positive electrode and the negative electrode; and
an electrolyte,
wherein at least one of the positive electrode for the lithium secondary battery and the negative electrode for the lithium secondary battery is an electrode for a lithium secondary battery pre-lithiated according to the method of any one of claims 1 to 11.

[Figure 1]

## INTERNATIONAL SEARCH REPORT

| International application No. |
| --- |
| **PCT/KR2023/001111** |

| A. | CLASSIFICATION OF SUBJECT MATTER |
| --- | --- |

**H01M 4/139**(2010.01)i; **H01M 4/1395**(2010.01)i; **H01M 4/1391**(2010.01)i; **H01M 4/04**(2006.01)i; **H01M 10/052**(2010.01)i; **H01M 4/38**(2006.01)i; **H01M 4/48**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/139(2010.01); B32B 27/32(2006.01); C09J 123/26(2006.01); C23C 14/14(2006.01); H01M 10/052(2010.01); H01M 10/0525(2010.01); H01M 4/134(2010.01); H01M 4/1395(2010.01); H01M 4/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전리튬(prelithiation), 집전체(current collector), 전극활물질(electrode active material), 이형층(release layer), 기재층(substrate layer), 접착력(adhesion)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2021-0029459 A (LG CHEM, LTD.) 16 March 2021 (2021-03-16)<br>See claims 1, 4-5 and 7-8; paragraphs [0005], [0035], [0054]-[0057], [0066] and [0078]-[0081]; and figures 1-2. | 1-13 |
| A | KR 10-2140127 B1 (LG CHEM, LTD.) 31 July 2020 (2020-07-31)<br>See claim 13; and paragraphs [0118]-[0120]. | 1-13 |
| A | KR 10-2242810 B1 (LG CHEM, LTD.) 21 April 2021 (2021-04-21)<br>See claims 10 and 15. | 1-13 |
| A | JP 6574122 B2 (TORAY ADVANCED FILM CO., LTD.) 11 September 2019 (2019-09-11)<br>See claims 1 and 3-8. | 1-13 |
| A | EP 3764436 A1 (LG CHEM, LTD.) 13 January 2021 (2021-01-13)<br>See claims 1, 7-8 and 10-12. | 1-13 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 May 2023** | **12 May 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/001111**

**C.    DOCUMENTS CONSIDERED TO BE RELEVANT**

| Category* | Citation of document, with indication, where appropriate, of the relevant passages | Relevant to claim No. |
|---|---|---|
| A | JP 2020-187975 A (ULVAC JAPAN LTD.) 19 November 2020 (2020-11-19)<br>See paragraphs [0022]-[0027]. | 1-13 |

Form PCT/ISA/210 (second sheet) (July 2022)

<div align="center">

**INTERNATIONAL SEARCH REPORT**
**Information on patent family members**

</div>

International application No.

**PCT/KR2023/001111**

| Patent document cited in search report | | | Publication date (day/month/year) | Patent family member(s) | | | Publication date (day/month/year) |
|---|---|---|---|---|---|---|---|
| KR | 10-2021-0029459 | A | 16 March 2021 | CN | 113826237 | A | 21 December 2021 |
| | | | | EP | 3961764 | A1 | 02 March 2022 |
| | | | | EP | 3961764 | A4 | 03 August 2022 |
| | | | | US | 2022-0223847 | A1 | 14 July 2022 |
| | | | | WO | 2021-045431 | A1 | 11 March 2021 |
| KR | 10-2140127 | B1 | 31 July 2020 | CN | 110168782 | A | 23 August 2019 |
| | | | | CN | 115579457 | A | 06 January 2023 |
| | | | | EP | 3547411 | A1 | 02 October 2019 |
| | | | | EP | 3547411 | A4 | 19 February 2020 |
| | | | | JP | 2019-537224 | A | 19 December 2019 |
| | | | | JP | 2021-141081 | A | 16 September 2021 |
| | | | | KR | 10-2018-0119254 | A | 02 November 2018 |
| | | | | US | 2020-0075939 | A1 | 05 March 2020 |
| | | | | WO | 2018-199505 | A1 | 01 November 2018 |
| KR | 10-2242810 | B1 | 21 April 2021 | CN | 111801824 | A | 20 October 2020 |
| | | | | EP | 3739677 | A1 | 18 November 2020 |
| | | | | EP | 3739677 | A4 | 31 March 2021 |
| | | | | EP | 3739677 | B1 | 01 June 2022 |
| | | | | JP | 2021-515358 | A | 17 June 2021 |
| | | | | JP | 7090940 | B2 | 27 June 2022 |
| | | | | KR | 10-2020-0011347 | A | 03 February 2020 |
| | | | | PL | 3739677 | T3 | 22 August 2022 |
| | | | | US | 2020-0403242 | A1 | 24 December 2020 |
| | | | | WO | 2020-022613 | A1 | 30 January 2020 |
| JP | 6574122 | B2 | 11 September 2019 | JP | 2017-064926 | A | 06 April 2017 |
| EP | 3764436 | A1 | 13 January 2021 | CN | 111868974 | A | 30 October 2020 |
| | | | | EP | 3764436 | A4 | 19 May 2021 |
| | | | | JP | 2021-517729 | A | 26 July 2021 |
| | | | | JP | 7248777 | B2 | 29 March 2023 |
| | | | | KR | 10-2020-0087437 | A | 21 July 2020 |
| | | | | KR | 10-2415166 | B1 | 29 June 2022 |
| | | | | US | 2021-0020927 | A1 | 21 January 2021 |
| | | | | WO | 2020-145753 | A1 | 16 July 2020 |
| JP | 2020-187975 | A | 19 November 2020 | JP | 7217663 | B2 | 03 February 2023 |

Form PCT/ISA/210 (patent family annex) (July 2022)

**EP 4 369 434 A1**

**Patent documents cited in the description**

- KR 1020220010594
- JP 2009080971 A